# EUROPÄISCHE PATENTANMELDUNG

(11) **EP 4 556 414 A1**
(43) Veröffentlichungstag der Anmeldung: **21.05.2025**
(21) Anmeldenummer: 24206896.3
(22) Anmeldetag: 16.10.2024
(51) Int. Cl.: B65G 47/244, B65B 53/00, B65G 57/24

(54) **VORRICHTUNG UND VERFAHREN ZUR VERPACKUNG UND LAGENBILDUNG VON VERPACKUNGSEINHEITEN**

(30) Priorität: 20.11.2023 DE 102023132253
(71) Anmelder: Krones Aktiengesellschaft, 93073 Neutraubling (DE)
(72) Erfinder: BEER, Erhard, 93073 Neutraubling (DE); HENSEL, Thomas, 93073 Neutraubling (DE); KOLLMUSS, Manuel, 93073 Neutraubling (DE); KUSCULAR, Tolga, 93073 Neutraubling (DE); MEHDI, Arsalan, 93073 Neutraubling (DE)
(74) Vertreter: Benninger Patentanwaltskanzlei

(57) **Zusammenfassung**

Die Erfindung betrifft eine Vorrichtung (1) und ein Verfahren zur Verpackung und Lagenbildung von Verpackungseinheiten (20). Die Vorrichtung (1) umfasst eine Steuerungseinrichtung (6), ein Verpackungsmodul (4), ein Gruppiermodul (7), um mehrere Verpackungseinheiten (20) in eine relative Anordnung und/oder Ausrichtung relativ zueinander abgestimmt auf eine zu bildende palettierfähige Lage (21) zu verbringen und ein erstes Vorgruppierungsmodul (9). Zwischen dem Gruppiermodul (7) und dem ersten Vorgruppierungsmodul (9) ist mindestens ein Funktionsabschnitt (15) ausgebildet, der durch die Steuerungseinrichtung (6) angesteuert wird, wobei diese einen ersten Betriebsmodus (51) und einen zweiten Betriebsmodus (52) des Funktionsabschnitts einstellen kann. In dem ersten Betriebsmodus (51) ist der mindestens eine Funktionsabschnitt (15) dazu ausgebildet, die zur Lagenbildung vorbereitete Anordnung der Verpackungseinheiten (20) kontinuierlich dem ersten Vorgruppierungsmodul (9) zuzuführen. Dagegen ist der mindestens eine Funktionsabschnitt (15) in dem zweiten Betriebsmodus (52) dazu ausgebildet, mindestens einen Teil einer zur Lagenbildung vorbereiteten relativen Anordnung und/oder Ausrichtung von Verpackungseinheiten (20) innerhalb des Funktionsabschnitts in Transportrichtung (50) zusammenzuschieben.

## Beschreibung

Die vorliegende Erfindung betrifft eine Vorrichtung sowie ein Verfahren zur Verpackung und Lagenbildung von Verpackungseinheiten.

Bei der Verpackung von Artikeln, insbesondere von Getränkebehältern, Flaschen o. dgl. zu Gebinden, werden die Artikel in gewünschter Weise zusammengestellt und mit einem Verpackungsmittel zusammengefasst. Beispielsweise werden die Artikelgruppen mit einer Schrumpffolie umhüllt. Die Schrumpffolie wird durch Zufuhr von Heißluft in einem Schrumpftunnel um die Artikel herum aufgeschrumpft. Die Artikel treten hierbei mit der Schrumpffolie über einen Eingang in den Schrumpftunnel ein und verlassen den Schrumpftunnel nach dem Schrumpfprozess über einen Ausgang. Durch den Schrumpftunnel kann sich eine Fördervorrichtung bzw. Horizontalfördervorrichtung erstrecken, um die Artikel während des Schrumpfprozesses durch den Schrumpftunnel zu bewegen.

Bevor die Artikel in den Schrumpftunnel geführt werden, wird thermoplastisches Verpackungsmaterial auf eine Zusammenstellung an Artikeln aufgebracht, um aus der jeweiligen Zusammenstellung über das thermoplastische Verpackungsmaterial im Schrumpftunnel eine Verpackungseinheit zu erzeugen.

Eine derartige Schrumpfvorrichtung ist beispielsweise aus dem deutschen Gebrauchsmuster mit der Veröffentlichungsnummer DE 20 2007 018 402 U1 bekannt.

Bei gattungsgemäßen Vorrichtungen gemäß dem DE-Gebrauchsmuster DE 20 2007 018 402 U1 folgt auf den Schrumpftunnel eine Horizontalfördereinrichtung, auf welcher die Artikel nach Verlassen des Schrumpftunnels aufstehen und ggf. in Richtung weiterer Arbeitsstationen bewegt werden. Auf der Horizontalfördereinrichtung bzw. während ihres Transportes durch die jeweilige Horizontalfördereinrichtung kühlen die Artikel sodann ab und können hierauf folgend durch die weiteren Arbeitsstationen manipuliert werden. Vor dem Zuführen an die weiteren Arbeitsstationen kann es notwendig sein, die Artikel zu gruppieren bzw. zu verteilen, so dass die Verpackungseinheiten die jeweilige Arbeitsstation mit einer bestimmten Verteilung bzw. Gruppierung erreichen. Hierzu kann der Arbeitsstation eine Einrichtung zum Gruppieren bzw. Verteilen vorgeordnet sein.

Sofern ein Schrumpftunnel außer Betrieb genommen wird, müssen sämtliche mit Schrumpffolie umhüllte Artikelgruppen bzw. Verpackungseinheiten aus dem Schrumpftunnel gefahren, um aufgrund des im Schrumpftunnel herrschenden Temperaturniveaus nicht beschädigt zu werden. Die jeweilige an den Schrumpftunnel anschließende Horizontalfördereinrichtung dient hierbei als Puffer, welcher sämtliche jeweiligen im Schrumpftunnel befindlichen Gebinde bei einer Außerbetriebnahme des Schrumpftunnels aufnehmen kann. Sofern der Schrumpftunnel bzw. die Verpackungslinie erneut in Betrieb genommen wird, können die auf der Horizontalfördereinrichtung bzw. dem Puffer aufstehenden Verpackungseinheiten sodann in Richtung einer jeweiligen Arbeitsstation weiterbewegt werden.

Auch bei der Umverpackung der Artikelgruppen mit einem anderen Umverpackungsmittel, beispielsweise beim Zusammenfassen der Artikelgruppen vermittels eines Umreifungsbandes, einer Kartonumverpackung, einer oberen Greifkartonverpackung o.ä. kann es gewünscht sein, dass bei einem Betriebsstopp der Anlage das Verpackungsmodul leergefahren wird, so dass sich keine weiteren Artikelgruppen bzw. Verkaufseinheiten innerhalb des Verpackungsmoduls befinden. Auch in diesem Fall ist ein entsprechender Pufferbereich nach dem Verpackungsmodul notwendig.

Derartige Vorrichtungen bzw. Pufferabschnitte einer Verpackungslinie besitzen einen hohen Platzbedarf. Wünschenswert wären demnach ausgehend vom Stand der Technik Vorrichtungen, die für die Pufferung von Artikelgruppen oder Verkaufseinheiten aus einem Verpackungsmodul einen gegenüber dem bekannten Stand der Technik reduzierten Platzbedarf aufweisen.

Eine Aufgabe der Erfindung ist daher, eine Vorrichtung und ein Verfahren zur Verpackung und Lagenbildung von Verpackungseinheiten zur Verfügung zu stellen, welche einen geringen Platzbedarf erfordern. Die Vorrichtung soll sich zudem durch einen einfachen Aufbau auszeichnen. Das Verfahren soll einfach umgesetzt werden können.

Die obige Aufgabe wird durch eine Vorrichtung und ein Verfahren zur Verpackung und Lagenbildung von Verpackungseinheiten gelöst, die die Merkmale in den unabhängigen Ansprüchen umfassen. Weitere vorteilhafte Ausgestaltungen werden durch die Unteransprüche beschrieben.

Eine erfindungsgemäße Vorrichtung zur Verpackung und Lagenbildung von Verpackungseinheiten umfasst eine Steuerungseinrichtung, welche Steuerungseinrichtung dazu ausgebildet ist, zumindest einen Teil der Handhabungsmodule der Vorrichtung anzusteuern. Bei der Steuerungseinrichtung kann es sich alternativ um eine Maschinensteuerung handeln, die dazu ausgebildet ist, alle Handhabungsmodule einer kompletten Getränkebehandlungs- und -verpackungsanlage anzusteuern und deren Arbeitsweisen zu koordinieren, wobei die erfindungsgemäße Vorrichtung einen Teil der kompletten Getränkebehandlungs- und -verpackungsanlage bildet.

Die Vorrichtung umfasst ein Verpackungsmodul, welches Verpackungsmodul dazu ausgebildet ist, mindestens zwei Artikel durch ein Umverpackungsmittel zu einer Verpackungseinheit zusammenzufassen.

Vorzugsweise werden die Artikel in einer Transportrichtung über einen Artikelzulauf zugeführt. Die Artikel werden beispielsweise in einem Einteilmodul zu Artikelgruppen zusammengestellt und in einem Verpackungsmodul zu Verpackungseinheiten zusammengefasst.

Das Einteilmodul umfasst hierfür beispielsweise Einteilstangen, die zwischen umlaufenden Zugmitteln angeordnet sind. Die Einteilstangen tauchen jeweils nach einer definierten Anzahl an Artikeln hinter diesen ein und trennen diese als Artikelgruppe von den nachfolgenden Artikeln ab, indem sie die eine Artikelgruppe bildenden Artikel mit einer zumindest kurzzeitig erhöhten Fördergeschwindigkeit beaufschlagen. Ein entsprechendes Einteilmodul kann jedoch auch andere dem Fachmann bekannte geeignete Einteileinrichtungen umfassen. Besonders bevorzugt werden innerhalb des Einteilmoduls Artikelgruppen aus 2x2 Artikeln, oder 2x3 Artikeln o.ä. gebildet.

Bei den Artikeln handelt es sich vorzugsweise um Getränkebehälter, insbesondere um Flaschen aus PET oder einem anderen geeigneten Kunststoff oder auch aus Glas, insbesondere aus Mineralglas. Gemäß einer weiteren bevorzugten Variante können die Artikel auch durch Dosen aus Kunststoff, Glas und/oder Aluminium oder einem anderen Metall o.ä. gebildet sein.

Bei dem Verpackungsmodul kann es sich beispielsweise um eine Faltmodul für Kartonumverpackungen, ein Applikationsmodul für obere Greifkartonverpackungen, ein Umreifungsmodul o.ä. handeln.

Bevorzugt ist vorgesehen, dass es sich bei dem Verpackungsmodul um ein Schrumpfmodul handeln, welches Schrumpfmodul ein Folieneinschlagmodul und einen Schrumpftunnel umfasst.

Die Vorrichtung umfasst weiterhin ein Gruppiermodul, welches Gruppiermodul dazu ausgebildet ist, mehrere Verpackungseinheiten in eine relative Anordnung und/oder Ausrichtung relativ zueinander zu verbringen, welche relative Anordnung und/oder Ausrichtung auf eine aus den jeweiligen mehreren Verpackungseinheiten zu bildende palettierfähige Lage abgestimmt ist.

Um dies zu umzusetzen, ist das Gruppiermodul vorzugsweise mit mindestens einer geeigneten Manipulationseinrichtung ausgestattet. Die Manipulationseinrichtung kann beispielsweise durch einen mit einem geeigneten Greifer ausgestatteten Tripoden, einen Roboter, ein geeignetes Portalsystem o.ä. gebildet sein.

Stromabwärts des Gruppiermoduls, d.h., dem Gruppiermodul in Transportrichtung nachfolgend, ist ein erstes Vorgruppierungsmodul angeordnet, welches erste Vorgruppierungsmodul ein orthogonal zur Transportrichtung anordenbares erstes Anschlagelement umfasst und welches erste Vorgruppierungsmodul dazu ausgebildet ist, die zur Lagenbildung vorbereitete relative Anordnung und/oder Ausrichtung der Verpackungseinheiten in Transportrichtung gegen das erste Anschlagelement zusammenzuschieben.

Hierzu umfasst das Vorgruppierungsmodul beispielsweise eine Transporteinrichtung in Form eines endlos umlaufenden Förderbands o.ä., über welche Transporteinrichtung die zur Lagenbildung vorbereitete Anordnung und/oder Ausrichtung der Verpackungseinheiten in Transportrichtung bewegt und dabei gegen das erste Anschlagelement geführt werden.

Bei der Vorrichtung ist vorgesehen, dass zwischen dem Gruppiermodul und dem ersten Vorgruppierungsmodul mindestens ein Funktionsabschnitt ausgebildet ist. Dieser mindestens eine Funktionsabschnitt wird durch die Steuerungseinrichtung der Vorrichtung angesteuert, wobei die Steuerungseinrichtung unterschiedliche Betriebsmodi des Funktionsabschnitts einstellen kann, insbesondere einen ersten Betriebsmodus und einen zweiten Betriebsmodus. Unter dem ersten Betriebsmodus versteht man insbesondere den normalen Produktionsbetrieb der Vorrichtung, während der zweite Betriebsmodus einen sogenannten Störmodus darstellt, in welchem die Vorrichtung nur noch eingeschränkt arbeitet.

In dem ersten Betriebsmodus fungiert der Funktionsabschnitt insbesondere als ein reines Transportmodul und führt die zur Lagenbildung vorbereitete Anordnung der Verpackungseinheiten kontinuierlich dem ersten Vorgruppierungsmodul zu.

In dem zweiten Betriebsmodus ist der mindestens eine Funktionsabschnitt dazu ausgebildet, eine Aufstauungs- und Pufferfunktion zu übernehmen, indem mindestens ein Teil der Verpackungseinheiten, die zur Vorbereitung einer Lagenbildung in eine relative Anordnung und/oder Ausrichtung gebracht worden sind, innerhalb des Funktionsabschnitts in Transportrichtung aufzuakkumulieren.

Insbesondere ist also vorgesehen, dass der in einem zweiten Betriebsmodus befindliche Funktionsabschnitt die Funktion einer ersten Vorgruppierung übernimmt. Bevorzugt ist somit vorgesehen, dass in dem zweiten Betriebsmodus innerhalb des mindestens einen Funktionsabschnitts ein Aufakkumulieren von Verpackungseinheiten in Form einer in Transportrichtung zusammengeschobenen Anordnung und/oder Ausrichtung der Verpackungseinheiten erfolgt.

Weiterhin umfasst die Vorrichtung in der Regel ein dem ersten Vorgruppierungsmodul in Transportrichtung nachfolgendes zweites Vorgruppierungsmodul, in welchem zweiten Vorgruppierungsmodul die bereits in Transportrichtung zusammengeschobene vorbereitete Anordnung und/oder Ausrichtung der Verpackungseinheiten mit Hilfe von seitlichen Zentriereinrichtungen orthogonal zur Transportrichtung zu einer fertigen palettierfähigen Lage zusammengeschoben wird/werden.

Um die in Transportrichtung zusammengeschobene vorbereitete Anordnung und/oder Ausrichtung der Verpackungseinheiten von dem ersten Vorgruppierungsmodul in das zweite Vorgruppierungsmodul zu überführen, muss das orthogonal zur Transportrichtung angeordnete erste Anschlagelement des ersten Vorgruppierungsmoduls aus dem Transportweg der zusammengeschobenen vorbereiteten Anordnung und/oder Ausrichtung der Verpackungseinheiten entfernt werden.

Beispielsweise kann hierbei vorgesehen sein, dass das erste Anschlagelement nach unten abtaucht und somit aus der Transportstrecke entfernt wird. Alternativ kann vorgesehen sein, dass das erste Anschlagelement nach oben oder seitlich weggeschwenkt wird o.ä.

Die innerhalb des zweiten Vorgruppierungsmoduls fertiggestellte palettierfähige Lage kann nunmehr beispielsweise einem Palettiermodul zugeführt werden, in welchem Palettiermodul mehrere fertige palettierfähige Lagen auf einer Palette für die nachfolgende Transport- und/oder Lagerhaltung übereinandergestapelt werden.

Ein Störbetrieb kann innerhalb der Vorrichtung beispielsweise dadurch entstehen, dass die Verpackungseinheiten aufgrund eines Fehlers eines dem Verpackungsmodul nachfolgenden Handhabungsmoduls nicht weiterbearbeitet werden können und somit nicht abgerufen werden können. Beispielsweise wird bei einer Störung des Palettiermoduls, die in dem zweiten Vorgruppierungsmodul fertiggestellte Lage nicht mehr vom Palettiermodul abgerufen, so dass die Lage das zweite Vorgruppierungsmodul blockiert.

Dementsprechend kann eine innerhalb des ersten Vorgruppierungsmoduls zur Lagenbildung vorbereitete, in Transportrichtung zusammengeschobene Anordnung und/oder Ausrichtung der Verpackungseinheiten nicht in das zweite Vorgruppierungsmodul überführt werden, da dieses noch mit einer fertiggestellten Lage belegt ist.

Um trotzdem die Verpackungseinheiten aus dem Verpackungsmodul zu entfernen, insbesondere um in einem Schrumpftunnel eines Schrumpfmoduls befindliche Verpackungseinheiten aus dem Schrumpftunnel zu entfernen, ist vorgesehen, dass der mindestens eine Funktionsabschnitt durch die Steuerungseinrichtung in den zweiten Betriebsmodus überführt wird, in welchem der mindestens eine Funktionsabschnitt die Funktion einer ersten Vorgruppierung übernimmt, d.h., es wird nunmehr innerhalb des im zweiten Betriebsmodus befindlichen Funktionsabschnitts mindestens ein Teil einer zur Lagenbildung vorbereiteten relativen Anordnung und/oder Ausrichtung von Verpackungseinheiten in Transportrichtung zusammengeschoben.

Damit der Funktionsabschnitt im Störungsmodus die Vorgruppierungsfunktion erfüllen kann, ist gemäß einer Ausführungsform vorgesehen, dass der Funktionsabschnitt eine Transporteinrichtung und ein orthogonal zur Transportrichtung anordenbares zweites Anschlagelement umfasst.

In dem ersten Betriebsmodus befindet sich das zweite Anschlagelement des Funktionsabschnitts außerhalb der Transportstrecke für die Verpackungseinheiten, welche dementsprechend in dem ersten Betriebsmodus über den mindestens einen Funktionsabschnitt kontinuierlich in Transportrichtung zum ersten Vorgruppierungsmodul bewegt werden können.

Befindet sich der Funktionsabschnitt dagegen im zweiten Betriebsmodus, dann befindet sich das dem Funktionsabschnitt zugeordnete zweite Anschlagelement orthogonal zur Transportrichtung angeordnet innerhalb der Transportstrecke für die Verpackungseinheiten, so dass diese gegen das zweite Anschlagelement des Funktionsabschnitts anlaufen und an diesem aufakkumuliert werden.

Eine Ausführungsform der Erfindung sieht vor, dass die Vorrichtung mindestens zwei Funktionsabschnitte umfasst, wobei die Steuerungseinrichtung dazu ausgebildet ist, die Funktionsabschnitte sequenziell von dem ersten Betriebsmodus in den zweiten Betriebsmodus zu überführen. Die Funktionsabschnitte sind vorzugsweise direkt aufeinanderfolgend zwischen dem Gruppiermodul und dem ersten Vorgruppierungsmodul angeordnet.

Insbesondere ist vorgesehen, dass die Steuerungseinrichtung dazu ausgebildet ist, zuerst einen sogenannten ersten Funktionsabschnitt in den zweiten Betriebsmodus zu überführen, welcher erste Funktionsabschnitt in Transportrichtung zuvorderst, und somit am nächsten zum ersten Vorgruppierungsmodul angeordnet ist, insbesondere welcher erste Funktionsabschnitt in Transportrichtung dem ersten Vorgruppierungsmodul direkt vorgeordnet ist.

Sobald der im zweiten Betriebsmodus befindliche erste Funktionsabschnitt eine komplette zusammengeschobenen Anordnung und/oder Ausrichtung der Verpackungseinheiten für eine palettierfähige Lage aufgenommen hat, wird durch die Steuerungseinrichtung nunmehr der nachgeordnete zweite Funktionsabschnitt angesteuert und in den zweiten Betriebsmodus gebracht, so dass der zweite Funktionsabschnitt nunmehr ebenfalls als erste Vorgruppierung fungiert.

Insbesondere wird das dem zweiten Funktionsabschnitt zugeordnete Anschlagelement in den Transportweg der Verpackungseinheiten eingebracht, so dass diese gegen das Anschlagelement des zweiten Funktionsabschnitts auflaufen und als zusammengeschobenen Anordnung und/oder Ausrichtung aufakkumuliert werden.

Bei mehr als zwei Funktionsabschnitten wird das soeben beschriebene Verfahren sukzessive fortgesetzt, bis sich keine Verpackungseinheiten mehr innerhalb des Verpackungsmoduls befinden. Nunmehr kann ein Anlagenstopp erfolgen, bei dem zumindest Teile der Gesamtanlage stillgelegt werden, bis die Störung behoben ist.

In diesem Zusammenhang kann vorgesehen sein, dass alle aus dem Verpackungsmodul ausgeschleusten Verpackungseinheiten noch innerhalb des Gruppiermoduls gehandhabt und auf den mindestens einen Funktionsabschnitt überführt werden. Alternativ kann vorgesehen sein, dass sich ein Teil der Verpackungseinheiten zum Zeitpunkt des Anlagenstopps noch innerhalb des Gruppiermoduls befindet.

In diesem Zusammenhang soll darauf hingewiesen werden, dass die Anzahl der verwendeten Funktionsabschnitte von der Kapazität des Verpackungsmoduls abhängt, insbesondere davon, wie viele Verpackungseinheiten sich zu einem jeweiligen Zeitpunkt des Störungsfalls innerhalb des Verpackungsmoduls befinden, welche Verpackungseinheiten entsprechend aus dem Verpackungsmodul entfernt werden müssen. Gegebenenfalls kann ein einziger Funktionsabschnitt ausreichen, um das Verpackungsmodul leerzufahren, in der Regel werden aber wohl zwei oder mehrere Funktionsabschnitte notwendig sein bzw. verwendet werden.

Gemäß einer Ausführungsform ist vorgesehen, dass Gruppiermodul unmittelbar an das Verpackungsmodul anschließend angeordnet ist.

Alternative Ausführungsformen können vorsehen, dass weitere Funktionsmodule zwischen dem Verpackungsmodul und dem Gruppiermodul vorgesehen sind.

Wird das Verpackungsmodul beispielsweise durch ein Schrumpfmodul gebildet, so kann es sinnvoll sein, zwischen dem Schrumpfmodul und dem Gruppiermodul eine Kühlstrecke auszubilden, innerhalb welcher die im Schrumpfmodul gebildeten Verpackungseinheiten vor der Handhabung durch die Manipulationseinrichtung des Gruppiermoduls zur Vorbereitung einer Lagenbildung zumindest teilweise abgekühlt werden. Eine solche Kühlstrecke umfasst beispielsweise mehrere Gebläse, mit welchen kühle und insbesondere kühlende Luft auf die aus dem Schrumpfmodul kommenden Verpackungseinheiten geblasen wird.

Die hier beschriebene Vorrichtung unterscheidet sich vom bekannten Stand der Technik dadurch, dass zwischen dem Verpackungsmodul und dem Gruppiermodul keine Pufferstrecke für die im Verpackungsmodul erzeugten Verpackungseinheiten ausgebildet ist. Die Funktion der Pufferung wird stattdessen durch den dem Gruppiermodul in Transportrichtung nachfolgenden mindestens einen Funktionsabschnitt erfüllt.

Die vorbeschriebene Vorrichtung kann vorzugsweise Teil einer Getränkeverpackungsanlage sein. Eine solche Getränkeverpackungsanlage umfasst beispielsweise einen Nassteil mit einem Dosen und/oder Flaschenabschieber, einem Füllmodul und einem dem Füllmodul zugeordneten Verschließmodul sowie optional ein Etikettiermodul. Zwischen dem Füllmodul und dem Etikettiermodul oder anderen nachfolgenden Handhabungsmodulen kann ein Pasteur angeordnet sein.

Auch ist vorstellbar, dass die Getränkeverpackungsanlage beispielsweise ein Blasformmodul zur Herstellung von PET- Flaschen umfasst, welche nachfolgend befüllt, verschlossen und etikettiert werden.

Nachfolgend werden die in Dosen oder Flaschen abgefüllten Getränke in einer Verpackungsvorrichtung bzw. einem sogenannten Herstellungsmodul zu Verpackungseinheiten zusammengefasst bzw. es werden Stückgüter in Form von Gebinden erzeugt.

Beispielsweise werden mehrere Artikel zu Artikelgruppen zusammengestellt, welche mit einem Verpackungsmittel zusammengefasst werden.

Die Verpackungseinheiten werden nachfolgend in einem als Gruppiermodul bzw. Lagenbildungsmodul ausgebildeten Handhabungsmodul o.ä. zu palettierfähigen Lagen zusammengestellt, welche in einer Palettiervorrichtung auf Paletten gestapelt werden.

Innerhalb der Getränkeverpackungsanlage werden die Artikel und Verpackungseinheiten bzw. Stückgüter über geeignete Transportsysteme, welche ggfl. mit geeigneten Puffersystemen ausgestattet sind, von einem Handhabungsmodul zum nächsten befördert.

Die Komponenten der Getränkeverpackungsanlage sind nur beispielhaft zu verstehen. Andere Konfigurationen umfassend eine im Rahmen der Anmeldung beschriebene Vorrichtung sollen ebenfalls von der Anmeldung umfasst sein.

Die Erfindung betrifft weiterhin ein Verfahren zur Verpackung und Lagenbildung von Verpackungseinheiten, bei welchem Verfahren mindestens zwei Artikel durch ein Umverpackungsmittel zu einer Verpackungseinheit zusammengefasst werden. Eine Mehrzahl von Verpackungseinheiten wird in Vorbereitung einer Lagenbildung in eine relative Anordnung und/oder Ausrichtung relativ zueinander gebracht, welche relative Anordnung und/oder Ausrichtung auf eine aus den jeweiligen mehreren Verpackungseinheiten zu bildende palettierfähige Lage abgestimmt ist.

Bei dem Verfahren ist vorgesehen, dass die derart zur Lagenbildung vorbereitete Anordnung der Verpackungseinheiten in einem ersten Betriebsmodus über mindestens einen Funktionsabschnitt kontinuierlich einem Vorgruppierungsmodul zugeführt wird, in welchem ersten Vorgruppierungsmodul die zur Lagenbildung vorbereitete Anordnung der Verpackungseinheiten in Transportrichtung zusammengeschoben wird. Weiterhin ist vorgesehen, dass in einem zweiten Betriebsmodus mindestens ein Teil der Verpackungseinheiten, die in Vorbereitung einer Lagenbildung in eine relative Anordnung und/oder Ausrichtung gebracht worden sind, innerhalb des Funktionsabschnitts in Transportrichtung aufakkumuliert werden.

Bei einem Neustart der Vorrichtung bzw. der Gesamtanlage ist vorgesehen, dass zuerst der durch den mindestens einen Funktionsabschnitt gebildete Pufferbereich leergeräumt wird. Insbesondere werden zuerst die innerhalb des mindestens einen Funktionsabschnitts gepufferten Verpackungseinheiten den nachfolgenden Handhabungsmodulen zugeführt. Vorzugsweise kann hierbei vorgesehen sein, dass hierbei das erste Vorgruppierungsmodul als Durchlaufmodul für die innerhalb des Funktionsabschnitts in Transportrichtung zusammengeschobene Anordnung und/oder Ausrichtung der Verpackungseinheiten verwendet wird, welche direkt in das zweite Vorgruppierungsmodul überführt und in diesem zur palettierfähigen Lage zusammengeschoben und nachfolgend im Palettierungsmodul palettiert werden.

Erst wenn der mindestens eine Funktionsabschnitt leergeräumt ist, erfolgt über die Steuerungseinrichtung die Freigabe für das Verpackungsmodul, dass dieses wieder seinen Produktionsbetrieb aufnehmen kann.

Der mindestens eine Funktionsabschnitt kann nicht nur in vorteilhafter Weise verwendet werden, wenn eine Störfunktion in nachfolgenden Handhabungsmodulen vorliegt. Auch bei einem Problem der Manipulationseinrichtung des Gruppiermoduls, beispielsweise bei einem Achsfehler o.ä., kann die Pufferfunktion des Funktionsabschnitts vorteilhaft genutzt werden. In diesem Fall wird die Transporteinrichtung / die Transporteinrichtungen des Gruppiermoduls auf Durchlauf geschaltet, so dass die Verpackungseinheiten dieses durchlaufen, ohne dabei entsprechend einem zu erstellenden Lagenschema positioniert und/oder ausgerichtet werden.

Durch Verbringen des mindestens einen Funktionsabschnitts in den zweiten Betriebsmodus können zumindest ein Teil der Verpackungseinheiten innerhalb des Funktionsabschnitts zwischengespeichert werden, während der restliche Teil der Verpackungseinheiten gegebenenfalls innerhalb des Gruppiersystems verbleibt und gegebenenfalls durch einen Bediener händisch aus diesem entfernt werden muss.

Gemäß der oben beschriebenen Ausführungsformen der Erfindung ist insbesondere vorgesehen, dass der mindestens eine Funktionsabschnitt dazu ausgebildet ist, eine komplette zur Bildung einer palettierfähigen Lage vorbereitete relative Anordnung und/oder Ausrichtung von Verpackungseinheiten aufzunehmen.

Gemäß einer alternativen Ausführungsform kann ein Funktionsabschnitt in Transportrichtung länger ausgestaltet und dazu ausgebildet sein, eine Mehrzahl von kompletten zur Bildung einer palettierfähigen Lage vorbereitete relativen Anordnungen und/oder Ausrichtungen von Verpackungseinheiten aufzunehmen, die innerhalb des Funktionsabschnitts direkt aufeinanderfolgend angeordnet werden.

Bei einem Anlagenstart werden dann jeweils relativen Anordnungen und/oder Ausrichtungen von Verpackungseinheiten gemäß einer zu erstellenden palettierfähigen Lage abgetrennt und in das zweite Vorgruppierungsmodul überführt. Insbesondere kann hierbei das erste Vorgruppierungsmodul als Taktmodul fungieren, wobei die Fördergeschwindigkeit der Transporteinrichtung des ersten Vorgruppierungsmoduls nach Übertritt einer relativen Anordnung und/oder Ausrichtung von Verpackungseinheiten gemäß einer zu erstellenden palettierfähigen Lage zumindest kurzzeitig erhöht wird, um diese Anordnung und/oder Ausrichtung von Verpackungseinheiten von den nachfolgenden Verpackungseinheiten abzutrennen und dem zweiten Vorgruppierungsmodul zuzuführen.

Bei der hier beschriebenen Vorrichtung und dem Verfahren werden die Verpackungseinheiten im Falle eines Störbetriebs komplett aus dem Verpackungsmodul ausgeschleust und zwischengespeichert. Während beim bekannten Stand der Technik in einem Störungsfall die Verpackungseinheiten in Reihe aufgestaut und gepuffert werden, werden sie bei der hier beschriebenen Vorrichtung und dem hier beschriebenen Verfahren zuerst noch in dem Gruppiermodul in eine relative Anordnung und/oder Ausrichtung relativ zueinander gebracht, welche relative Anordnung und/oder Ausrichtung auf eine aus den jeweiligen mehreren Verpackungseinheiten zu bildende palettierfähige Lage abgestimmt ist. Das Aufstauen und die Pufferung erfolgt durch Erzeugung einer in Transportrichtung zusammengeschobenen Anordnung und/oder Ausrichtung der Verpackungseinheiten innerhalb mindestens eines dem Gruppiermodul nachfolgenden Funktionsabschnitts.

Da hierbei die Verpackungseinheiten zumindest teilweise auch nebeneinander angeordnet sind, kann eine deutliche Verkürzung des durch den mindestens einen Funktionsabschnitt gebildeten Pufferbereichs gegenüber den bekannten, zwischen Verpackungsmodul und Gruppiermodul angeordneten Pufferstrecken erreicht werden.

Mit der vorliegenden Erfindung soll u.a. erreicht werden, dass eine effektive Pufferstrecke zwischen einer Robotergruppierung und einem nachgeordneten Palettierer vorgesehen ist. Außerdem soll diese Pufferstrecke flexibel einsetzbar und verwendbar sein und bspw. eine Umschaltung von mindestens einem Puffermodul, ggf. von mehreren Puffermodulen von einem reinen Transportbetrieb zu einem Pufferbetrieb ermöglichen.

Die hier so bezeichnete Pufferstrecke, die im vorliegenden Zusammenhang auch ganz allgemein als Funktionsabschnitt bezeichnet wird, kann insbesondere durch mehrere Vorgruppierungen oder mehrere Vorgruppierungsstationen gebildet sein. Wie es bereits erläutert wurde, kann der mindestens eine Funktionsabschnitt bzw. die mindestens eine Pufferstrecke in einem ersten Betriebsmodus dazu ausgebildet sein, eine zur Lagenbildung vorbereitete Anordnung von Stückgütern oder Verpackungseinheiten kontinuierlich einem ersten Vorgruppierungsmodul zuzuführen. Außerdem kann der mindestens eine Funktionsabschnitt oder die mindestens eine Pufferstrecke in einem zweiten Betriebsmodus dazu ausgebildet sein, mindestens einen Teil der Verpackungseinheiten oder Stückgüter, die zur Vorbereitung einer Lagenbildung in eine relative Anordnung und/oder Ausrichtung gebracht worden sind, innerhalb des Funktionsabschnitts in Transportrichtung aufzuakkumulieren bzw. aufzustauen.

Es kann sinnvoll sein, mehrere Vorgruppierungen oder Vorgruppierungsstationen in Transportrichtung nacheinander anzuordnen. Insbesondere kann es sinnvoll sein, alle Vorgruppierungen oder Vorgruppierungsstationen in Transportrichtung nacheinander anzuordnen.

Einzelne oder mehrere Vorgruppierungen können zudem mittels geeigneter Anschlagelemente zusammengeschoben werden, was zunächst nur in Transportrichtung erfolgen kann, d.h. vorzugsweise ohne ein gleichzeitiges Zusammenschieben quer zur Transportrichtung. Ein solches Zusammenschieben mehrerer Vorgruppierungen oder Vorgruppierungsstationen kann insbesondere erst auf einem letzten Transporteur vor dem Palettierer erfolgen.

Zusätzliche Gebläse können bedarfsweise für eine Kühlung sorgen.

Sofern die Konfiguration vorsieht, dass keine Pufferstrecke zwischen Schrumpftunnel und einer Gruppierstation vorhanden ist, besteht auch keine Möglichkeit zur Stauung. Da bei der vorliegenden Erfindung jedoch einzelne oder mehrere Gruppierstationen die Doppelfunktion einer Staustrecke übernehmen können, führt die fehlende Staustrecke, die üblicherweise durch eine entsprechend lang ausgebildete Transportstrecke zwischen Schrumpftunnel und Gruppierstation gebildet ist, nicht zu Funktionsbeeinträchtigungen.

Sofern eine Ausschleusung überzähliger Artikel oder Stückgüter vorgesehen sein soll, kann diese mittels der bereits vorhandenen Gruppierstationen und/oder Vorgruppierungsstationen oder wahlweise mit einer zusätzlichen Einrichtung zum Ausschleusen betroffener Stückgüter oder Artikel erfolgen.

Erwähnt werden kann zudem eine weitere Ausführungsform, bei der lediglich eine zusätzliche Vorgruppierung und darüber hinaus ein längeres Pufferband anstatt mehrerer Module vorgesehen sein kann.

Die Artikel oder Stückgüter können bspw. durch Kartons, durch Schrumpfgebinde oder durch andere Verpackungseinheiten gebildet sein.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Darstellung einer beispielhaften Ausführungsform einer Vorrichtung zur Verpackung und Lagenbildung von Verpackungseinheiten.
Figuren 2 bis 14 zeigen ein Verfahren zur Verpackung und Lagenbildung von Verpackungseinheiten im ersten Betriebsmodus einer Vorrichtung gemäß Fig. 1.
Figuren 15 bis 20 zeigen ein Verfahren zur Verpackung und Lagenbildung von Verpackungseinheiten im zweiten Betriebsmodus einer Vorrichtung gemäß Fig. 1.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Fig. erforderlich sind. Die dargestellten Ausführungsformen stellen lediglich Beispiele dar, wie die Erfindung ausgestaltet sein kann und stellen keine abschließende Begrenzung dar.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

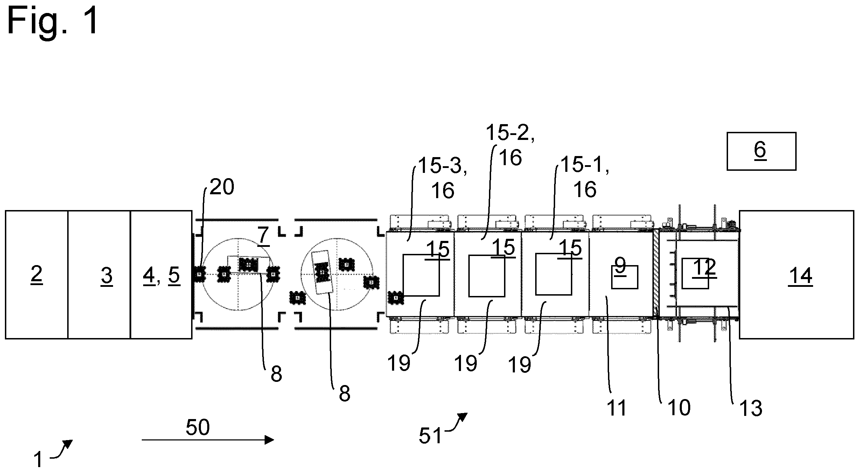

Die Fig. 1 zeigt eine schematische Darstellung einer beispielhaften Ausführungsform einer Vorrichtung 1 zur Verpackung und Lagenbildung von Verpackungseinheiten 20.

Hierbei werden Artikel in einer Transportrichtung 50 über einen Artikelzulauf 2 zugeführt.

Die Artikel werden in einem Einteilmodul 3 zu Artikelgruppen zusammengestellt und in einem Verpackungsmodul 4 zu Verpackungseinheiten 20 zusammengefasst.

Bei dem Verpackungsmodul 4 kann es sich beispielsweise um eine Faltmodul für Kartonumverpackungen, ein Applikationsmodul für obere Greifkartonverpackungen, ein Umreifungsmodul o.ä. handeln.

Bevorzugt ist vorgesehen, dass es sich bei dem Verpackungsmodul 4 um ein Schrumpfmodul 5 umfassend ein Folieneinschlagmodul und einen Schrumpftunnel handelt.

Weiterhin umfasst die Vorrichtung 1 eine Steuerungseinrichtung 6, welche dazu ausgebildet ist, die unterschiedlichen Handhabungsmodule der Vorrichtung 1 anzusteuern und zu koordinieren.

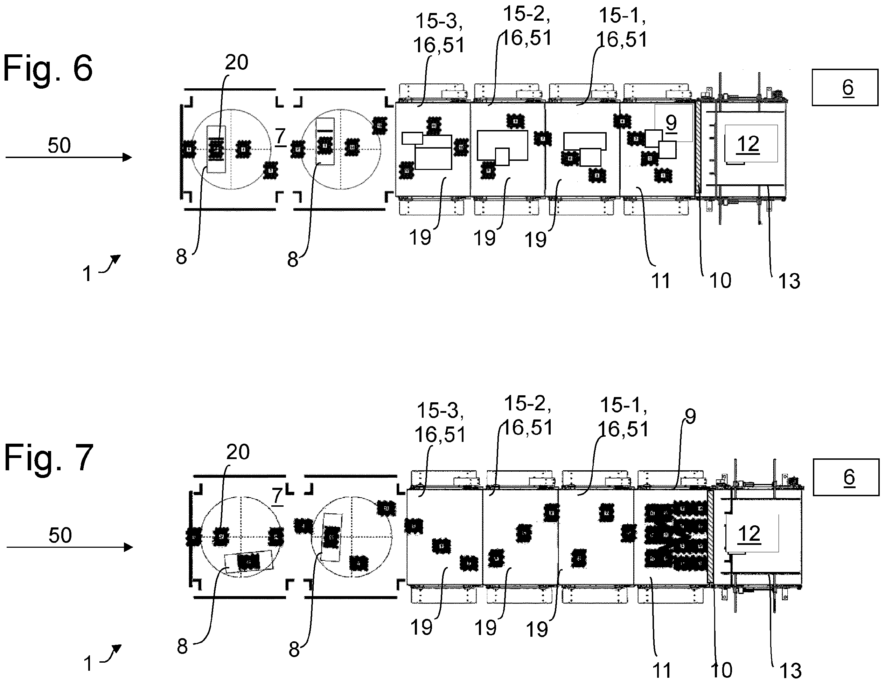

Die im Verpackungsmodul 4 erzeugten Verpackungseinheiten 20 werden in einem Gruppiermodul 7 in eine relative Anordnung und/oder Ausrichtung verbracht, welche relative Anordnung und/oder Ausrichtung auf eine aus den jeweiligen mehreren Verpackungseinheiten 20 zu bildende palettierfähige Lage 21 (vergleiche Fig. 6) abgestimmt ist. Um dies zu verwirklichen, ist das Gruppiermodul 7 mit mindestens einer geeigneten Manipulationseinrichtung 8 ausgestattet. Im vorliegenden Fall sind zwei in Transportrichtung 50 aufeinanderfolgende Manipulationseinrichtungen 8 vorgesehen, die bei der Anordnung und/oder Ausrichtung von Verpackungseinheiten 20 zur Ausbildung bzw. Vorbereitung einer zu bildenden palettierfähigen Lage 21 zusammenarbeiten.

Die Manipulationseinrichtungen 8 können durch Tripoden, Roboter, geeignete Portalsysteme o.ä. gebildet werden, die insbesondere mit geeigneten Greifersystemen o.ä. ausgestattet sind.

Dem Gruppiermodul 7 in Transportrichtung 50 nachfolgend ist ein erstes Vorgruppierungsmodul 9 angeordnet, welches erste Vorgruppierungsmodul 9 ein orthogonal zur Transportrichtung 50 anordenbares Anschlagelement 10 umfasst und welches erste Vorgruppierungsmodul 9 dazu ausgebildet ist, die zur Lagenbildung vorbereitete Anordnung und/oder Ausrichtung der Verpackungseinheiten 20 in Transportrichtung 50 gegen das Anschlagelement 10 des Vorgruppierungsmoduls 9 zusammenzuschieben.

Hierzu umfasst das Vorgruppierungsmodul 9 eine Transporteinrichtung 11 in Form eines endlos umlaufenden Förderbands o.ä., über welches die zur Lagenbildung vorbereitete Anordnung und/oder Ausrichtung der Verpackungseinheiten 20 in Transportrichtung 50 bewegt und dabei gegen das Anschlagelement 10 des Vorgruppierungsmoduls 9 geführt werden.

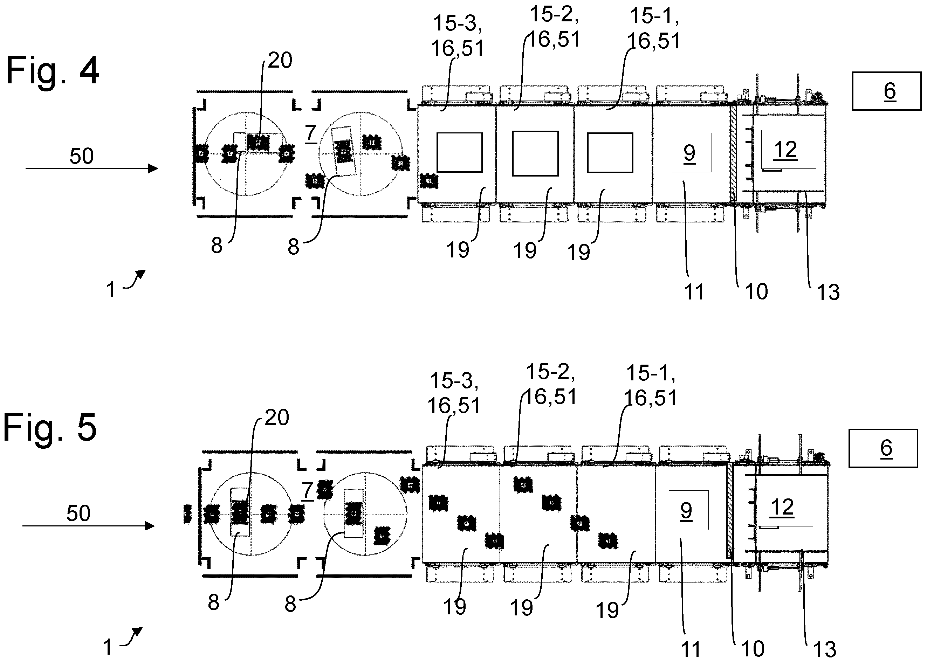

Weiterhin kann dem ersten Vorgruppierungsmodul 9 in Transportrichtung 50 nachfolgend ein zweites Vorgruppierungsmodul 12 vorgesehen sein, bei welchem die bereits in Transportrichtung 50 zusammengeschobene vorbereitete Anordnung 22 und/oder Ausrichtung der Verpackungseinheiten 20 mit Hilfe von seitlichen Zentriereinrichtungen 13 orthogonal zur Transportrichtung 50 zur fertigen palettierfähigen Lage zusammengeschoben werden (siehe auch Figuren 4 bis 6).

Um die in Transportrichtung 50 zusammengeschobene vorbereitete Anordnung und/oder Ausrichtung der Verpackungseinheiten 20 von dem ersten Vorgruppierungsmodul 9 in das zweite Vorgruppierungsmodul 12 zu überführen, muss das orthogonal zur Transportrichtung 50 angeordnete Anschlagelement 10 des ersten Vorgruppierungsmoduls 9 aus dem Transportweg der Verpackungseinheiten 20 entfernt werden. Beispielsweise kann vorgesehen sein, dass das Anschlagelement 10 des ersten Vorgruppierungsmoduls 9 nach unten abtaucht und somit aus der Transportstrecke entfernt wird. Alternativ kann vorgesehen sein, dass das Anschlagelement 10 des ersten Vorgruppierungsmoduls 9 nach oben oder seitlich weggeschwenkt wird o.ä.

Die innerhalb des zweiten Vorgruppierungsmoduls 12 fertiggestellte palettierfähige Lage 21 kann nunmehr beispielsweise einem Palettiermodul 14 zugeführt werden, in welchem Palettiermodul 14 mehrere fertige palettierfähige Lagen 21 auf einer Palette für Transport- und/oder Lagerhaltung übereinandergestapelt werden.

Bei der erfindungsgemäßen Vorrichtung 1 ist vorgesehen, dass zwischen dem Gruppiermodul 7 und dem ersten Vorgruppierungsmodul 9 mindestens ein Funktionsabschnitt 15 ausgebildet ist. Im dargestellten Ausführungsbeispiel sind zwischen dem Gruppiermodul 7 und dem ersten Vorgruppierungsmodul 8 drei identisch ausgebildete Funktionsabschnitte 15 angeordnet, welche zur besseren Unterscheidung mit den Bezugszeichen 15-1, 15-2 und 15-3 gekennzeichnet werden.

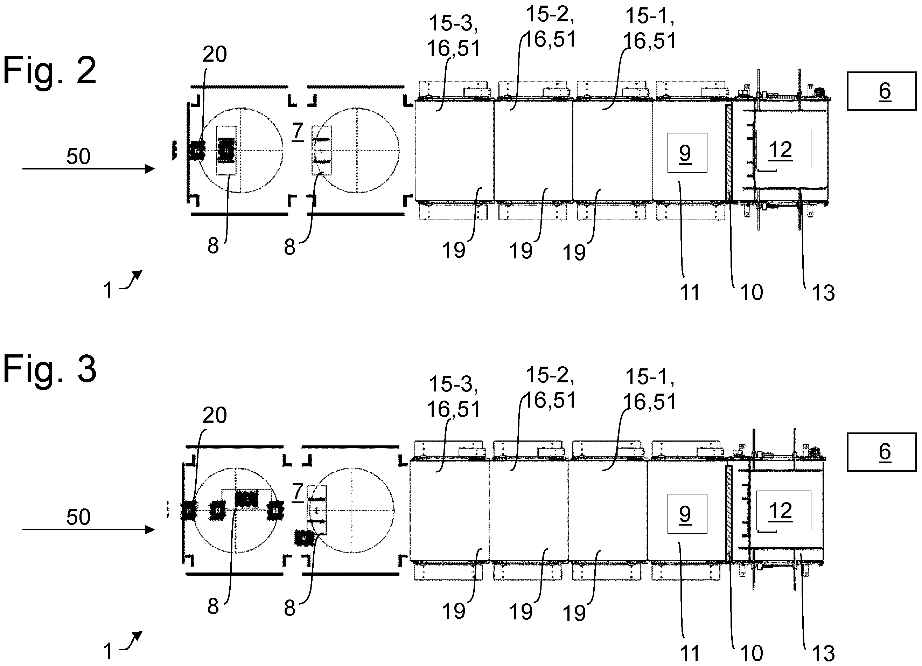

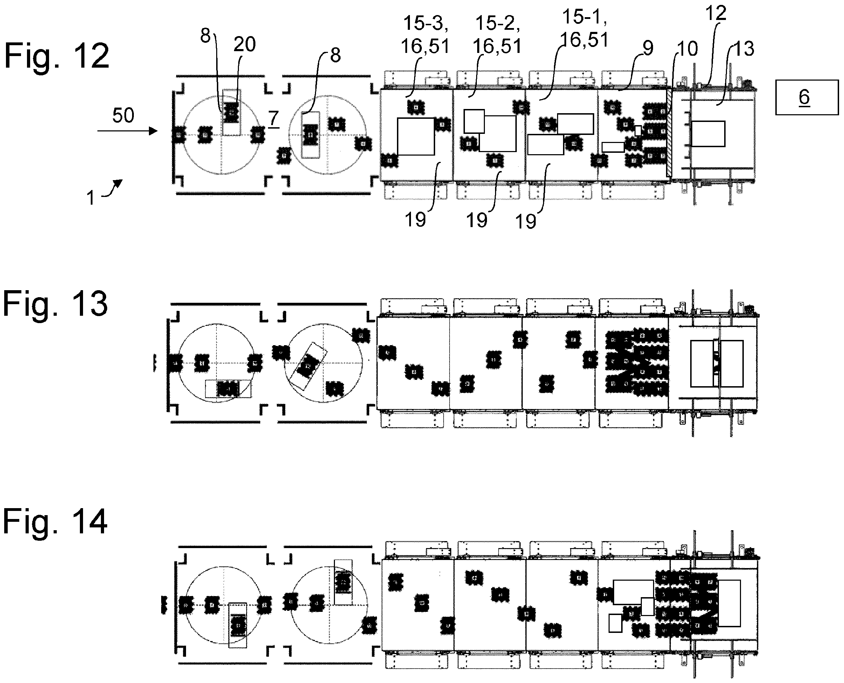

Der mindestens eine Funktionsabschnitt 15 kann bzw. die drei Funktionsabschnitte 15-1, 15-2, 15-3 werden durch die Steuerungseinrichtung 6 angesteuert, wobei insbesondere ein erster Betriebsmodus 51 bzw. normaler Produktionsbetrieb (vergleiche Figuren 2 bis 14) und ein zweiter Betriebsmodus 52 bzw. Störmodus des Funktionsabschnitts 15 / der Funktionsabschnitte 15-1, 15-2, 15-3 bzw. der Vorrichtung 1 eingestellt werden kann (vergleiche Figuren 14 bis 28).

In dem ersten Betriebsmodus 51, wie er in Fig. 1 dargestellt ist, fungieren die drei Funktionsabschnitte 15 jeweils als Transportmodule 16. D.h., die im Gruppiermodul 7 erstellte und zur Lagenbildung vorbereitete relative Anordnung und/oder Ausrichtung der Verpackungseinheiten 20 werden über die Funktionsabschnitte 15 jeweils kontinuierlich dem ersten Vorgruppierungsmodul 9 zugeführt, in welchem ersten Vorgruppierungsmodul 9 die zur Lagenbildung vorbereitete relative Anordnung und/oder Ausrichtung der Verpackungseinheiten 20 in Transportrichtung 50 zusammengeschoben wird/werden.

Im Falle eines Störbetriebs, beispielsweise aufgrund einer Störung dem Verpackungsmodul 4 nachfolgender Handhabungsmodule, wird der mindestens eine Funktionsabschnitt 15 durch die Steuerungseinrichtung 6 in einen sogenannten zweiten Betriebsmodus versetzt.

Ein Störbetrieb kann beispielsweise dadurch entstehen, dass aufgrund eines Fehlers des Palettiermoduls 14 die in dem zweiten Vorgruppierungsmodul 12 fertiggestellte Lage 21 nicht mehr vom Palettiermodul 14 abgerufen wird. Dementsprechend kann eine innerhalb des ersten Vorgruppierungsmoduls 9 zur Lagenbildung vorbereitete, in Transportrichtung 50 zusammengeschobene Anordnung und/oder Ausrichtung der Verpackungseinheiten 20 nicht in das zweite Vorgruppierungsmodul 12 überführt werden.

Um das Verpackungsmodul 4 zu entleeren, insbesondere um in einem Schrumpftunnel eines Schrumpfmoduls 5 befindliche Verpackungseinheiten aus diesem zu entfernen, ist vorgesehen, dass der mindestens eine Funktionsabschnitt 15 durch die Steuerungseinrichtung 6 in einen zweiten Betriebsmodus 52 überführt wird (vergleiche Figuren 14 bis 28), in welchem zweiten Betriebsmodus 52 der mindestens eine Funktionsabschnitt 15 die Funktion einer ersten Vorgruppierung 17 übernimmt, wobei mindestens ein Teil einer zur Lagenbildung vorbereiteten relativen Anordnung und/oder Ausrichtung von Verpackungseinheiten 20 innerhalb des Funktionsabschnitts 15 in Transportrichtung 50 zusammengeschoben wird/werden.

Insbesondere ist somit vorgesehen, dass in einem zweiten Betriebsmodus 52 innerhalb des mindestens einen Funktionsabschnitts 15 ein Aufakkumulieren der Verpackungseinheiten 20 in Form einer in Transportrichtung 50 zusammengeschobenen Anordnung 22 und/oder Ausrichtung der Verpackungseinheiten 20 erfolgt (vergleiche Figuren 14 bis 28).

Die hier dargestellte Ausführungsform zeigt, dass das Gruppiermodul 7 unmittelbar an das Verpackungsmodul 4 anschließend angeordnet ist. Weitere Ausführungsformen können vorsehen, dass weitere Funktionsmodule zwischen dem Verpackungsmodul 4 und dem Gruppiermodul 7 vorgesehen sind. Wird das Verpackungsmodul 4 beispielsweise durch ein Schrumpfmodul 5 gebildet, so kann es sinnvoll sein, zwischen dem Schrumpfmodul 5 und dem Gruppiermodul 7 eine Kühlstrecke auszubilden, innerhalb welcher die im Schrumpfmodul 5 gebildeten Verpackungseinheiten 20 vor der Handhabung durch die Manipulationseinrichtung 8 des Gruppiermoduls 7 zumindest teilweise abgekühlt werden. Eine solche Kühlstrecke umfasst beispielsweise mehrere Gebläse, mit welchen kühle Luft auf die aus dem Schrumpfmodul 5 kommenden Verpackungseinheiten 20 geblasen wird.

Die Figuren 2 bis 14 zeigen ein Verfahren zur Verpackung und Lagenbildung von Verpackungseinheiten 20 im ersten Betriebsmodus 51 und die Figuren 14 bis 28 zeigen ein Verfahren zur Verpackung und Lagenbildung von Verpackungseinheiten 20 im zweiten Betriebsmodus 52. Die Darstellung der Vorrichtung 1 wurde hierbei auf die für das Verfahren wesentlichen Handhabungsmodule reduziert.

Die Figuren 2 bis 14 zeigen, dass die Verpackungseinheiten 20 im Gruppiermodul 7 durch die Manipulationseinrichtungen 8 zur Lagenbildung vorbereitet werden, indem Sie in eine relative Anordnung und/oder Ausrichtung relativ zueinander gebracht werden, welche relative Anordnung und/oder Ausrichtung auf eine aus den jeweiligen mehreren Verpackungseinheiten 20 zu bildende palettierfähige Lage 21 (vergleiche Fig. 7) abgestimmt ist.

Die derart angeordneten und/oder ausgerichteten Verpackungseinheiten 20 werden im ersten Betriebsmodus 51 über die Funktionsabschnitte 15 kontinuierlich in Transportrichtung 50 zum ersten Vorgruppierungsmodul 9 bewegt. Innerhalb des ersten Vorgruppierungsmoduls 9 werden die Verpackungseinheiten 20 durch das sich orthogonal zur Transportrichtung 50 erstreckende Anschlagelement 10 des Vorgruppierungsmoduls 9 zu einer in Transportrichtung 50 zusammengeschobenen Anordnung 22 und/oder Ausrichtung der Verpackungseinheiten 20 aufakkumuliert (Fig. 7).

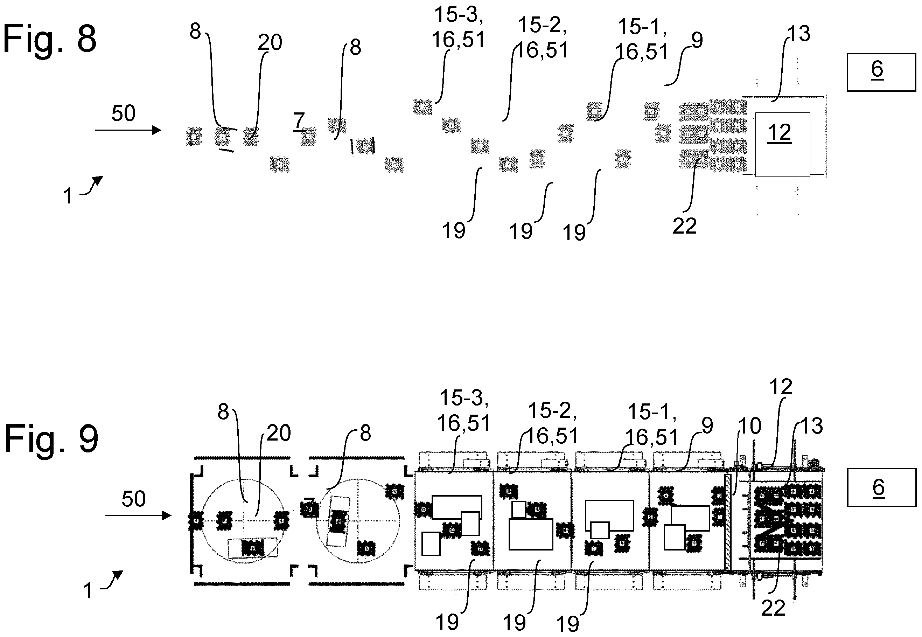

Das Anschlagelement 10 des Vorgruppierungsmoduls 9 wird kurzzeitig aus dem Transportweg entfernt, damit die zusammengeschobene Anordnung 22 in das zweite Vorgruppierungsmodul 12 überführt werden kann (Fig. 8). Anschließend wird das Anschlagelement 10 des Vorgruppierungsmoduls 9 wieder orthogonal zur Transportrichtung 50 angeordnet, um die nächste in Transportrichtung 50 zusammengeschobene Anordnung 22 und/oder Ausrichtung der Verpackungseinheiten 20 innerhalb des ersten Vorgruppierungsmoduls 9 aufzuakkumulieren. (Fig. 9).

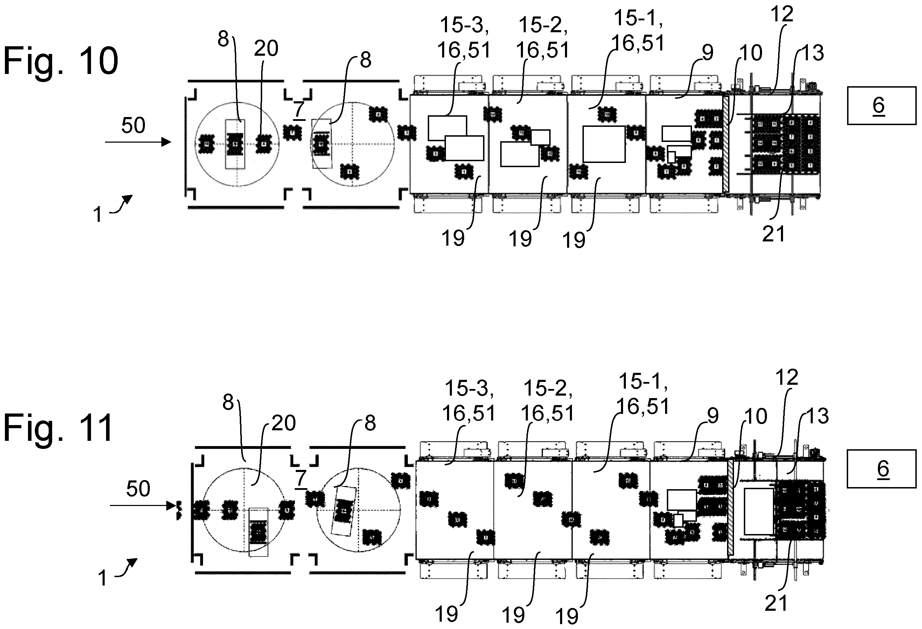

Während im ersten Vorgruppierungsmodul 9 bereits die nächste zusammengeschobene Anordnung 22 und/oder Ausrichtung der Verpackungseinheiten 20 erzeugt wird, wird die in das zweite Vorgruppierungsmodul 12 überführte in Transportrichtung 50 zusammengeschobene Anordnung 22 und/oder Ausrichtung der Verpackungseinheiten 20 durch die seitlichen Zentriereinrichtungen 13 des zweiten Vorgruppierungsmoduls 12 zu einer palettierfähigen Lage 21 zusammengeschoben (Fig. 10).

Die palettierfähige Lage 21 kann nunmehr aus dem zweiten Vorgruppierungsmodul 12 entnommen und der weiteren Handhabung zugeführt werden, beispielsweise indem die palettierfähige Lage 21 in Transportrichtung 50 zu nachfolgenden Handhabungsmodulen bewegt wird (Fig. 11).

Die Figuren 12 bis 14 zeigen das Herstellen einer weiteren in Transportrichtung 50 zusammengeschobene Anordnung 22 und/oder Ausrichtung der Verpackungseinheiten 20 innerhalb des ersten Vorgruppierungsmoduls 9 und überführen derselben in das zweite Vorgruppierungsmodul 12.

Im Falle eines Störbetriebs in einem der zweiten Vorgruppierung 12 nachgeordneten Handhabungsmouls erfolgen die Schritte der Vorbereitung der Lagenbildung und der Überführung einer innerhalb des ersten Vorgruppierungsmoduls 9 in Transportrichtung 50 zusammengeschobenen Anordnung 22 und/oder Ausrichtung der Verpackungseinheiten 20 in das zweite Vorgruppierungsmodul 12 analog zu den in den den Figuren 2 bis 10 dargestellten Schritten. Jedoch kann nunmehr, beispielsweise aufgrund einer Fehlfunktion eines nachgeordneten Palettiermoduls 14 o.ä. (vergleiche Fig. 1), die fertige Lage 21 nicht aus dem zweiten Vorgruppierungsmodul 12 abtransportiert werden.

Damit allerdings die zum Zeitpunkt der Störung innerhalb des Verpackungsmoduls 4 angeordneten Verpackungseinheiten 20 aus dem Verpackungsmodul 4 entfernt werden können, ist vorgesehen, dass diese weiterhin dem Gruppiermodul 7 zugeführt und in diesem vermittels der Manipulationseinrichtung 8 entsprechend angeordnet und/oder ausgerichtet werden.

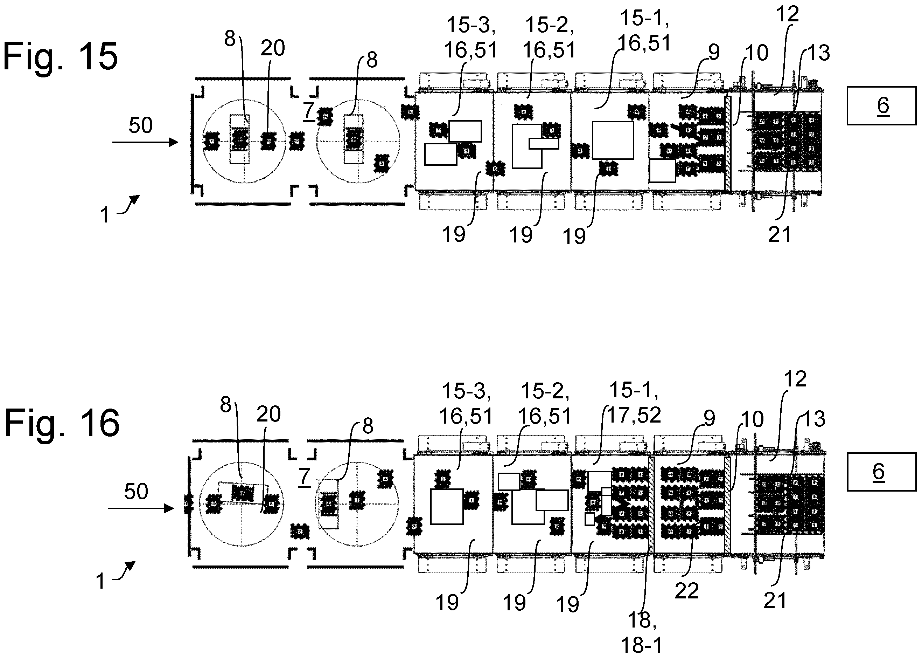

Die derart relativ zueinander angeordneten und/oder ausgerichteten Verpackungseinheiten 20 werden in Transportrichtung 50 über die Funktionsabschnitte 15 zum ersten Vorgruppierungsmodul 9 bewegt und in diesem in Transportrichtung 50 zu einer zusammengeschobenen Anordnung 22 und/oder Ausrichtung der Verpackungseinheiten 20 aufakkumuliert (Fig. 15).

Sobald eine solche Anordnung 22 innerhalb des ersten Vorgruppierungsmoduls 9 fertiggestellt ist, so dass innerhalb des ersten Vorgruppierungsmoduls 9 keine weiteren Verpackungseinheiten 20 aufgenommen werden können, steuert die Steuerungseinrichtung 6 eine Überführung des an das erste Vorgruppierungsmodul 9 angrenzenden ersten Funktionsabschnitts 15-1 in den zweiten Betriebsmodus 52 an.

Im zweiten Betriebsmodus 52 übernimmt dieser erste Funktionsabschnitt 15-1 insbesondere die Funktion einer weiteren ersten Vorgruppierung 17.

Um die Funktion einer ersten Vorgruppierung 17 zu erfüllen, sind die Funktionsabschnitte 15 jeweils mit einem zuordenbaren Anschlagelement 18 ausgestattet, welches sich im ersten Betriebsmodus 51 außerhalb der Transportstrecke der Verpackungseinheiten 20 befindet und welches im zweiten Betriebsmodus 52 orthogonal zur Transportrichtung 50 oberhalb der Transportfläche für die Verpackungseinheiten 20 angeordnet ist, so dass die gegen das dem ersten Funktionsabschnitt 15-1 zugeordnete Anschlagelement 18-1 anlaufenden Verpackungseinheiten 20 ebenfalls zu einer zusammengeschobenen Anordnung 22 und/oder Ausrichtung der Verpackungseinheiten 20 aufakkumuliert werden (Fig. 16).

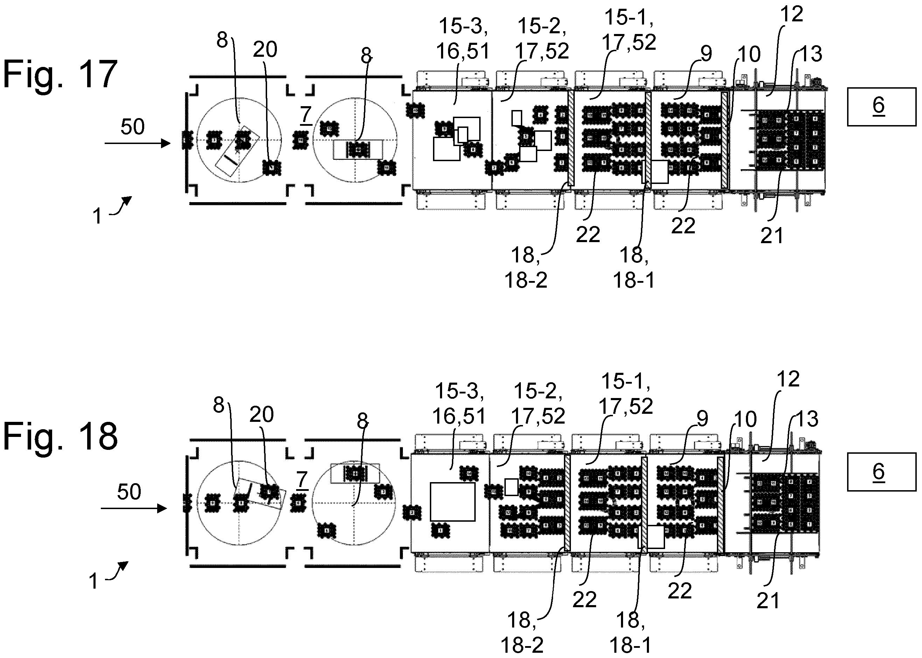

Umfasst der erste Funktionsabschnitts 15-1 eine komplette zusammengeschobenen Anordnung 22 und/oder Ausrichtung der Verpackungseinheiten 20 für eine palettierfähige Lage 21, so wird durch die Steuerungseinrichtung 6 nunmehr der mittlere, zweite Funktionsabschnitt 15-2 angesteuert und in den zweiten Betriebsmodus 52 überführt, so dass der mittlere, zweite Funktionsabschnitt 15-2 nunmehr ebenfalls als erste Vorgruppierung 17 fungiert (Fig. 17).

Insbesondere wird das dem mittleren, zweiten Funktionsabschnitt 15-2 zugeordnete Anschlagelement 18-2 in den Transportweg der Verpackungseinheiten 20 eingebracht, so dass diese gegen das Anschlagelement 18-2 des zweiten Funktionsabschnitts 15-2 auflaufen und als zusammengeschobenen Anordnung 22 und/oder Ausrichtung aufakkumuliert werden (Figuren 17 und 18).

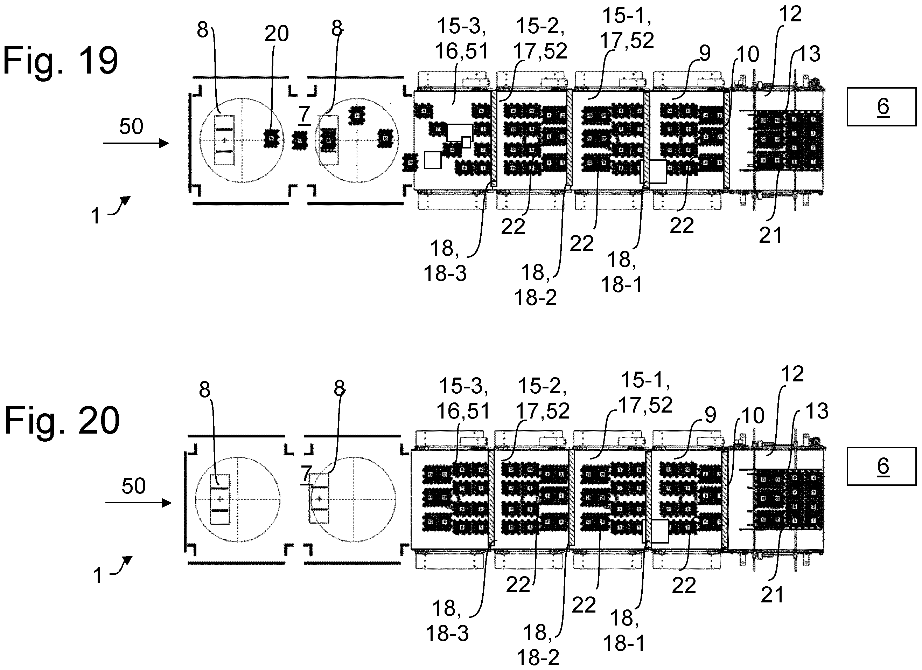

In analoger Weise wird der dem Gruppiermodul 7 direkt nachgeordnete dritte Funktionsabschnitt 15-3 von der Steuerungseinrichtung 6 in den zweiten Betriebsmodus 52 versetzt, wenn der mittlere, zweite Funktionsabschnitt 15-2 eine komplette zusammengeschobenen Anordnung 22 und/oder Ausrichtung der Verpackungseinheiten 20 für eine palettierfähige Lage 21 enthält (Figuren 19 und 20).

In Fig. 20 wird außerdem sichtbar, dass dem Gruppiermodul 7 keine weiteren Verpackungseinheiten 20 mehr zugeführt werden, da das Verpackungsmodul 4 (vergleiche Fig. 1) komplett leergefahren worden ist.

Die in den Figuren 1 bis 20 dargestellten drei Funktionsabschnitte 15 zwischen dem Gruppiermodul 7 und dem ersten Vorgruppierungsmodul 9 sind beispielhaft zu verstehen. Die Anzahl der verwendeten Funktionsabschnitte 15 hängt von der Kapazität des Verpackungsmoduls 4 ab und insbesondere davon, wie viele Verpackungseinheiten 20 sich zu einem jeweiligen Zeitpunkt innerhalb des Verpackungsmoduls 4 befinden, die in einem Störungsfall aus diesem entfernt werden müssen. Gegebenenfalls kann ein einziger Funktionsabschnitt 15 ausreichen, um das Verpackungsmodul 4 leerzufahren.

Bevorzugt sind die mehreren Funktionsabschnitte 15, die im ersten Betriebsmodus 51 jeweils eine Transportfunktion erfüllen und im Störbetrieb nach Bedarf in einen zweiten Betriebsmodus 52 überführt werden können, in welchem zweiten Betriebsmodus 52 sie eine Aufstauungs- und Pufferfunktion erfüllen, fluchtend aufeinanderfolgend zwischen dem Gruppiermodul 7 und dem ersten Vorgruppierungsmodul 9 angeordnet.

Auch kann vorgesehen sein, dass nicht alle aus dem Verpackungsmodul 4 zu entfernende Verpackungseinheiten 20 in einem Funktionsabschnitt 15 gespeichert werden müssen. Gemäß einer Ausführungsform kann vorgesehen sein, dass ein Teil der Verpackungseinheiten 4 bereits innerhalb des Gruppiermoduls 7 angeordnet und/oder ausgerichtet werden, aber sich beim anschließenden kompletten Maschinenstopp noch innerhalb des Gruppiermoduls 7 befinden können.

Wie im Zusammenhang mit der Beschreibung der Figuren 16 bis 20 verdeutlicht wird, umfasst jeder Funktionsabschnitt 15 eine Transporteinrichtung 19 und ein orthogonal zur Transportrichtung 50 anordenbares Anschlagelement 18. Diese wird bei Bedarf, insbesondere im zweiten Betriebsmodus 52, orthogonal zur Transportrichtung 50 innerhalb des Transportwegs bzw. oberhalb der Transportfläche der Verpackungseinheiten 20 angeordnet. Im ersten Betriebsmodus 51 befindet sich das Anschlagelement 18 des Funktionsabschnitts 15 dagegen in einer Position außerhalb des Transportwegs der Verpackungseinheiten 20.

Wie im Zusammenhang mit den Figuren 15 bis 20 weiterhin beschrieben worden ist, ist die Steuerungseinrichtung 6 dazu ausgebildet, bei mehreren aufeinanderfolgenden Funktionsabschnitten 15 diese sequentiell von dem ersten Betriebsmodus 51 in den zweiten Betriebsmodus 52 zu überführen. Insbesondere wird hierbei zuerst ein erster Funktionsabschnitt 15-1 in den zweiten Betriebsmodus 52 überführt, welcher in Transportrichtung 50 am nächsten zum ersten Vorgruppierungsmodul 9 angeordnet ist, insbesondere welcher in Transportrichtung 50 dem ersten Vorgruppierungsmodul 9 direkt vorgeordnet ist.

Die weiteren Funktionsabschnitte 15 erfüllen so lange die Funktion eines Transportmoduls 16, bis der im zweiten Betriebsmodus 52 die Funktion einer ersten Vorgruppierung 17 erfüllende erste Funktionsabschnitt 15-1 eine vollständige in Transportrichtung 50 zusammengeschobene Anordnung 22 und/oder Ausrichtung der Verpackungseinheiten 20 umfasst. Nunmehr wird der an den in Transportrichtung 50 zuvorderst angeordneten ersten Funktionsabschnitt 15-1 angrenzende zweite Funktionsabschnitt 15-2 in den zweiten Betriebsmodus 52 überführt usw.

Die hier beschriebene Vorrichtung 1 unterscheidet sich vom bekannten Stand der Technik dadurch, dass zwischen dem Verpackungsmodul 4 und dem Gruppiermodul 7 keine Pufferstrecke ausgebildet ist. Die Funktion der Pufferung wird stattdessen durch den dem Gruppiermodul 7 in Transportrichtung 50 nachfolgenden mindestens einen Funktionsabschnitt 15 erfüllt.

Bei der hier beschriebenen Vorrichtung 1 und dem Verfahren werden die Verpackungseinheiten 4 im Falle eines Störbetriebs ebenfalls komplett aus dem Verpackungsmodul 4 ausgeschleust und zwischengespeichert. Bevor die Verpackungseinheiten zwischengespeichert werden, werden diese bzw. zumindest ein Teil derselben in eine relative Anordnung und/oder Ausrichtung relativ zueinander gebracht, welche relative Anordnung und/oder Ausrichtung auf eine aus den jeweiligen mehreren Verpackungseinheiten zu bildende palettierfähige Lage abgestimmt ist.

Während beim bekannten Stand der Technik in einem Störungsfall die Verpackungseinheiten 20 in Reihe aufgestaut und gepuffert werden, werden sie bei der hier beschriebenen Vorrichtung und dem hier beschriebenen Verfahren zuerst noch in dem Gruppiermodul 7 in eine relative Anordnung und/oder Ausrichtung relativ zueinander gebracht. Das Aufstauen und die Pufferung erfolgt durch Erzeugung einer in Transportrichtung 50 zusammengeschobenen Anordnung 22 und/oder Ausrichtung der Verpackungseinheiten 20 innerhalb mindestens eines dem Gruppiermodul 7 nachfolgenden Funktionsabschnitts.

Da hierbei die Verpackungseinheiten 20 zumindest teilweise auch nebeneinander angeordnet sind, kann eine deutliche Verkürzung des durch die Funktionsabschnitte gebildeten Pufferbereichs gegenüber den bekannten, zwischen Verpackungsmodul 4 und Gruppiermodul 7 angeordneten Pufferstrecken erreicht werden.

Ein abschließender Hinweis sei an dieser Stelle zu den Beschreibungen von Ausführungsvarianten der Erfindung gegeben, wobei diese Beschreibungspassagen jeweils auf die beigefügten Zeichnungen Bezug nehmen. Wenn im Zusammenhang der Figuren und deren Beschreibungen generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichen

- 1: Vorrichtung
- 2: Artikelzulauf
- 3: Einteilmodul
- 4: Verpackungsmodul
- 5: Schrumpfmodul
- 6: Steuerungseinrichtung
- 7: Gruppiermodul
- 8: Manipulationseinrichtung
- 9: erstes Vorgruppierungsmodul
- 10: Anschlagelement
- 11: Transporteinrichtung
- 12: zweites Vorgruppierungsmodul
- 13: seitliche Zentriereinrichtung
- 14: Palettiermodul
- 15: Funktionsabschnitt
- 15-1: erster Funktionsabschnitt
- 15-2: zweiter (mittlerer) Funktionsabschnitt
- 15-3: dritter Funktionsabschnitt
- 16: Transportmodul
- 17: erste Vorgruppierung
- 18: Anschlagelement
- 18-1: dem ersten Funktionsabschnitt zugeordnetes Anschlagelement
- 18-2: dem zweiten Funktionsabschnitt zugeordnetes Anschlagelement
- 18-3: dem dritten Funktionsabschnitt zugeordnetes Anschlagelement
- 19: Transporteinrichtung
- 20: Verpackungseinheit
- 21: palettierfähige Lage
- 22: in Transportrichtung zusammengeschobenen Anordnung und/ oder Ausrichtung der Verpackungseinheiten
- 50: Transportrichtung
- 51: erster Betriebsmodus
- 52: zweiter Betriebsmodus

## Patentansprüche

1. Vorrichtung (1) zur Verpackung und Lagenbildung von Verpackungseinheiten (20), die Vorrichtung (1) umfassend
• eine Steuerungseinrichtung (6),
• ein Verpackungsmodul (4), welches Verpackungsmodul (4) dazu ausgebildet ist, mindestens zwei Artikel durch ein Umverpackungsmittel zu einer Verpackungseinheit (20) zusammenzufassen,
• ein Gruppiermodul (7), welches Gruppiermodul (7) dazu ausgebildet ist, mehrere Verpackungseinheiten (20) in eine relative Anordnung und/oder Ausrichtung relativ zueinander zu verbringen, welche relative Anordnung und/oder Ausrichtung auf eine aus den jeweiligen mehreren Verpackungseinheiten (20) zu bildende palettierfähige Lage (21) abgestimmt ist,
• ein stromabwärts des Gruppiermoduls (7) angeordnetes erstes Vorgruppierungsmodul (9), welches erste Vorgruppierungsmodul (9) ein orthogonal zur Transportrichtung (50) anordenbares erstes Anschlagelement (10) umfasst und welches erste Vorgruppierungsmodul (9) dazu ausgebildet ist, die zur Lagenbildung vorbereitete Anordnung und/oder Ausrichtung der Verpackungseinheiten (20) in Transportrichtung (50) gegen das erste Anschlagelement (10) zusammenzuschieben,
• wobei zwischen dem Gruppiermodul (7) und dem ersten Vorgruppierungsmodul (9) mindestens ein Funktionsabschnitt (15) ausgebildet ist,
• wobei durch die Steuerungseinrichtung ein erstes Betriebsmodus und ein zweiter Betriebsmodus des mindestens einen Funktionsabschnitts (15) einstellbar ist,
• wobei der mindestens eine Funktionsabschnitt (15) in dem ersten Betriebsmodus (51) dazu ausgebildet ist, die zur Lagenbildung vorbereitete Anordnung der Verpackungseinheiten (20) kontinuierlich dem ersten Vorgruppierungsmodul (9) zuzuführen, und
• wobei der mindestens eine Funktionsabschnitt (15) in dem zweiten Betriebsmodus (52) dazu ausgebildet ist, mindestens einen Teil der Verpackungseinheiten (20), die zur Vorbereitung einer Lagenbildung in eine relative Anordnung und/oder Ausrichtung gebracht worden sind, innerhalb des Funktionsabschnitts in Transportrichtung (50) aufzuakkumulieren.

2. Vorrichtung (1) nach Anspruch 1, wobei der mindestens eine Funktionsabschnitt (15) eine Transporteinrichtung (19) und ein orthogonal zur Transportrichtung (50) anordenbares zweites Anschlagelement (18) umfasst.

3. Vorrichtung (1) nach Anspruch 1 oder 2, wobei die Vorrichtung (1) mindestens zwei Funktionsabschnitte (15) umfasst, wobei die Steuerungseinrichtung (6) dazu ausgebildet ist, die Funktionsabschnitte (15) sequenziell von dem ersten Betriebsmodus (51) in den zweiten Betriebsmodus (52) zu überführen.

4. Vorrichtung (1) nach Anspruch 2, wobei die Steuerungseinrichtung (6) dazu ausgebildet ist, zuerst einen ersten Funktionsabschnitt (15-1) in den zweiten Betriebsmodus (52) zu überführen, welcher erste Funktionsabschnitt (15-1) in Transportrichtung (50) am nächsten zum ersten Vorgruppierungsmodul (9) angeordnet ist.

5. Vorrichtung (1) nach Anspruch 4, bei dem der erste Funktionsabschnitt (15-1) in Transportrichtung (50) dem ersten Vorgruppierungsmodul (9) direkt vorgeordnet ist.

6. Vorrichtung (1) nach einem der voranstehenden Ansprüche, wobei das Gruppiermodul (7) unmittelbar an das Verpackungsmodul (4) anschließend angeordnet ist.

7. Vorrichtung (1) nach einem der Ansprüche 1 bis 5, wobei zwischen dem Verpackungsmodul (4) und dem Gruppiermodul (7) eine Kühlstrecke ausgebildet ist.

8. Verfahren zur Verpackung und Lagenbildung von Verpackungseinheiten (20),
bei welchem Verfahren mindestens zwei Artikel durch ein Umverpackungsmittel zu einer Verpackungseinheit (20) zusammengefasst werden,
• wobei eine Mehrzahl von Verpackungseinheiten (20) in Vorbereitung einer Lagenbildung in eine relative Anordnung und/oder Ausrichtung relativ zueinander gebracht werden, welche relative Anordnung und/oder Ausrichtung auf eine aus den jeweiligen mehreren Verpackungseinheiten (20) zu bildende palettierfähige Lage (21) abgestimmt ist,
• wobei die derart zur Lagenbildung vorbereitete Anordnung der Verpackungseinheiten (20) in einem ersten Betriebsmodus (51) über mindestens einen Funktionsabschnitt (15) kontinuierlich einem ersten Vorgruppierungsmodul (9) zugeführt wird, in welchem ersten Vorgruppierungsmodul (9) die zur Lagenbildung vorbereitete Anordnung der Verpackungseinheiten (20) in Transportrichtung (50) zusammengeschoben wird, und
• wobei in zweiten Betriebsmodus (52) mindestens ein Teil der Verpackungseinheiten (20), die in Vorbereitung einer Lagenbildung in eine relative Anordnung und/oder Ausrichtung gebracht worden sind, innerhalb des mindestens einen Funktionsabschnitts (15) in Transportrichtung (50) aufakkumuliert wird.

9. Verfahren nach Anspruch 8, wobei der mindestens eine Funktionsabschnitt (15) in dem ersten Betriebsmodus (51) eine reine Transportfunktion erfüllt und wobei der mindestens eine Funktionsabschnitt (15) in dem zweiten Betriebsmodus (52) eine Aufstauungs- und Pufferfunktion erfüllt.

10. Verfahren nach Anspruch 8 oder 9, wobei mindestens zwei in Transportrichtung (50) nacheinander angeordnete Funktionsabschnitte (15) sequentiell angesteuert und nacheinander von dem ersten Betriebsmodus (51) in den zweiten Betriebsmodus (52) überführt werden.

11. Verfahren nach Anspruch 10, wobei zuerst ein erster Funktionsabschnitt (15-1) in den zweiten Betriebsmodus (52) überführt wird, welcher erste Funktionsabschnitt (15-1) in Transportrichtung (50) am nächsten zum ersten Vorgruppierungsmodul (9) angeordnet ist, insbesondere welcher erste Funktionsabschnitt (15-1) in Transportrichtung (50) dem ersten Vorgruppierungsmodul (9) direkt vorgeordnet ist.

12. Verfahren nach Anspruch 11, wobei nachfolgend ein zweiter Funktionsabschnitt (15-2) in den zweiten Betriebsmodus (52) überführt wird, welcher zweite Funktionsabschnitt (15-2) in Transportrichtung (50) am nächsten zum ersten Funktionsabschnitt (15-2) angeordnet ist, insbesondere welcher zweite Funktionsabschnitt (15-2) in Transportrichtung (50) dem ersten Funktionsabschnitt (15-1) direkt vorgeordnet ist.

13. Verfahren nach einem der Ansprüche 8 bis 12, wobei die Verpackungseinheiten (20) vor der Handhabung der Verpackungseinheiten (20) in Vorbereitung einer Lagenbildung mit einem Kühlmittel beaufschlagt werden.

14. Verfahren nach einem der Ansprüche 8 bis 13, wobei die Verpackungseinheiten (20) im Falle eines Störbetriebs komplett aus einem Verpackungsmodul (4) ausgeschleust werden, in welchem Verpackungsmodul (4) mindestens zwei Artikel durch ein Umverpackungsmittel zu einer Verpackungseinheit (20) zusammengefasst werden.

15. Verfahren nach Anspruch 14, wobei die Verpackungseinheiten (20) zwischengespeichert werden, wobei die Verpackungseinheiten (20) vor der Zwischenspeicherung zumindest teilweise in eine relative Anordnung und/oder Ausrichtung relativ zueinander gebracht werden, welche relative Anordnung und/oder Ausrichtung auf eine aus den jeweiligen mehreren Verpackungseinheiten (20) zu bildende palettierfähige Lage (21) abgestimmt ist.
